# EUROPEAN PATENT APPLICATION

(11) **EP 4 105 249 A1**
(43) Date of publication of application: **21.12.2022**
(21) Application number: 20918241.9
(22) Date of filing: 05.11.2020
(51) Int. Cl.: C08F 214/18, C09K 3/18, C08J 7/04

(54) **SOFT WATER- AND OIL-REPELLENT INCLUDING FLUORINE-CONTAINING POLYMER AS ACTIVE INGREDIENT**

(30) Priority: 10.02.2020 JP 2020020592
(71) Applicant: Unimatec Co., Ltd., Tokyo 105-0012 (JP)
(72) Inventor: SATO Yu, Kitaibaraki-shi, Ibaraki 319-1544 (JP); KIJIMA Tetsushi, Kitaibaraki-shi, Ibaraki 319-1544 (JP); KANEUMI Yoshiyama, Kitaibaraki-shi, Ibaraki 319-1544 (JP)
(74) Representative: Beckmann, Claus
(86) International application number: PCT/JP2020/041315
(87) International publication number: WO 2021/161593

(57) **Abstract**

A soft water- and oil-repellent comprising, as an active ingredient, a copolymer of a perfluoropolyether alcohol (meth)acrylic acid derivative represented by the general formula:

CH₂=CR₁COOCH₂CF(CF₃)[OCF₂CF(CF₃)]ₙOC₃F₇ [I]

(wherein R₁ is a hydrogen atom or a methyl group, and n is an integer of 1 to 20), and a (meth)acrylic acid ester represented by the general formula:

CH₂=CR₁COOR₂ [II]

(wherein R₁ is a hydrogen atom or a methyl group, and R₂ is an alkyl group, an alkoxyalkyl group, a cycloalkyl group, an aryl group, or an aralkyl group) and having a glass transition temperature Tg of 51 to 120°C. The soft water- and oil-repellent gives a coating film formed from a coating agent which closely follows the deformation of rubber or resin, and exhibits water- and oil- repellency.

## Description

### TECHNICAL FIELD

The present invention relates to a soft water- and oil-repellent comprising fluorine-containing polymer as an active ingredient. More specifically, the present invention relates to a soft water- and oil-repellent comprising, as an active ingredient, a fluorine-containing polymer that is a copolymer of a (meth)acrylic acid derivative containing a perfluoroalkyl group having 6 or less carbon atoms, which generally has low bioaccumulation potential.

### BACKGROUND ART

Acrylic acid derivatives of perfluoroalkyl group-containing alcohols, for example, CF₃(CF₂)₇CH₂CH₂OCOCH=CH₂, are used in large quantity as synthetic monomers of fluorine-containing copolymers constituting water- and oil-repellent for fiber. Perfluoroalkyl alcohols that are precursors thereof to acrylate are widely used as, for example, surfactants (Patent Document 1).

In Patent Document 2, it is described that in a surface-treating agent of a substrate, the appearance of water- and oil-repellency of a (meth)acrylate containing perfluoroalkyl group (Rf) depends on the orientation of the Rf group on a treated film and further described that for the orientation of the Rf group, the presence of melting point in a microcrystal originating in the Rf group (having 8 or more carbon atoms) is required, and, therefore, perfluoroalkyl group-containing (meth)acrylate containing a perfluoroalkyl group having 8 or more carbon atoms has been used. In addition, it has been shown that when a (meth)acrylate containing perfluoroalkyl group having 8 or less carbon atoms is used and no isocyanate monomer is contained, the contribution to water- and oil-repellent properties is insufficient, which is observed in the case of the perfluoroalkyl group having 8 or more carbon atoms.

On the other hand, perfluorooctanoic acid (PFOA) or perfluoroalkyl group-containing carboxylic acid (PFCA) containing a perfluoroalkyl group having 8 or more carbon atoms, which do not exist in nature, have been recently observed to be present in the air, rivers, and so on. It has been reported that, among these compounds, those having perfluoroalkyl groups having about 8 carbon atoms have high bioaccumulation potential and therefore have an environmental problem. Therefore, it is predicted that the manufacturing and the use of these compounds will become difficult in future.

Here, it is presently suggested that a possibility that among telomer compounds to be used as raw materials of surface-modifying agents such as water- and oil-repellent, compounds containing perfluoroalkyl groups having 8 or more carbon atoms are converted into PFCA in the environment. Therefore, it is predicted that manufacturing and the use of these compounds will become difficult in future. However, though compounds containing perfluoroalkyl groups having 6 or less carbon atoms are recognized to have low bioaccumulation potential, the compounds containing perfluoroalkyl groups having 6 or less carbon atoms are deemed difficult to achieve performance required for products such as soft water- and oil-repellent.

In addition, coatings formed from conventional water- and oil-repellent coating agents are not soft, and cracks are formed due to slight impact or pressure. Thus, their use applications are limited.

### PRIOR ART DOCUMENTS

### PATENT DOCUMENTS

Patent Document 1 : JP-B-63-22237
Patent Document 2 : WO 2004/035708 A1

### OUTLINE OF THE INVENTION

### PROBLEM TO BE SOLVED BY THE INVENTION

An object of the present invention is to provide a soft water- and oil-repellent that gives a coating film formed from a coating agent which closely follows the deformation of rubber or resin, and exhibits water and oil repellency.

### MEANS FOR SOLVING THE PROBLEM

The above object of the present invention can be achieved by a soft water- and oil-repellent comprising, as an active ingredient, a copolymer of a perfluoropolyether alcohol (meth)acrylic acid derivative represented by the general formula:

CH₂=CR₁COOCH₂CF(CF₃)[OCF₂CF(CF₃)]ₙOC₃F₇ [I]

(wherein R₁ is a hydrogen atom or a methyl group, and n is an integer of 1 to 20), and a (meth)acrylic acid ester represented by the general formula:

CH₂=CR₁COOR₂ [II]

(wherein R₁ is a hydrogen atom or a methyl group, and R₂ is an alkyl group, an alkoxyalkyl group, a cycloalkyl group, an aryl group, or an aralkyl group) and having a glass transition temperature Tg of 51 to 120°C. Here, the term "(meth)acrylic acid" means acrylic acid or methacrylic acid.

### EFFECT OF THE INVENTION

The soft water- and oil-repellent according to the present invention gives a coating film formed from a coating agent which closely follows the deformation of rubber or resin, exhibits water and oil repellency, and is tack-free in the tackiness test.

The fluorine-containing copolymer used in the present invention has many ether bonds that reduce the glass transition temperature Tg during the formation of the copolymer, which makes it possible to form a soft coating. Moreover, due to its very low surface energy, the fluorine-containing copolymer can sufficiently exhibit the performance required for water- and oil-repellents, such as water and oil repellency, releasability, and antifouling property.

Therefore, it can be effectively used as a water- and oil-repellent for rubber products, soft resin products and the like accompanied by their deformation in use.

### EMBODIMENTS FOR CARRYING OUT THE INVENTION

The water- and oil-repellent of the present invention comprises, as an active ingredient, a copolymer of a perfluoropolyether alcohol (meth)acrylic acid derivative represented by the following formula [I] and a (meth)acrylic acid ester represented by the following formula [II]:

CH₂=CR₁COOCH₂CF(CF₃)[OCF₂CF(CF₃)]ₙOC₃F₇ [I]

R₁: a hydrogen atom or a methyl group, preferably a methyl group
n: an integer of 1 to 20; preferably an integer of 1 to 4

CH₂=CR₁COOR₂ [II]

R₁: a hydrogen atom or a methyl group, preferably a methyl group
R₂: an alkyl group, an alkoxyalkyl group, a cycloalkyl group, an aryl group, or an aralkyl group; preferably an alkyl group

The perfluoropolyether alcohol (meth)acrylic acid derivative [I] is a known compound and is described, for example, in Patent Document 1. Examples of such a compound include the following compounds generated by esterification reaction of hexafluoropropylene oxide-derived perfluoropolyether alcohol C₃F₇O[CF(CF₃)CF₂O]ₙCF(CF₃)CH₂OH with (meth)acrylic acid halide:

CH₂=CR₁COOCH₂CF(CF₃)[OCF₂CF(CF₃)]OC₃F₇

CH₂=CR₁COOCH₂CF(CF₃)[OCF₂CF(CF₃)]₂OC₃F₇

CH₂=CR₁COOCH₂CF(CF₃)[OCF₂CF(CF₃)]₃OC₃F₇

CH₂=CR₁COOCH₂CF(CF₃)[OCF₂CF(CF₃)]₄OC₃F₇

The following compounds are preferably used:

CH₂=CHCOOCH₂CF(CF₃)[OCF₂CF(CF₃)]OC₃F₇

CH₂=C(CH₃)COOCH₂CF(CF₃)[OCF₂CF(CF₃)]OC₃F₇

Further, the (meth)acrylic acid ester [II] must have a glass transition temperature Tg (measured according to JIS K7121 corresponding to ISO 3146) of 51 to 120°C, preferably 65 to 105°C. For example, methyl methacrylate (Tg: 105°C), ethyl methacrylate (Tg: 65°C), or the like is used.

If a (meth)acrylic acid ester having a Tg higher than the above range is used, the softness becomes insufficient. In contrast, if a (meth)acrylic acid ester having a Tg lower than the above range is used, the fluidity increases, and the coating film cannot be maintained.

The (meth)acrylic acid ester [II] is used at a ratio of about 5 to 30 wt.%, preferably about 5 to 10 wt.%, in the copolymer. If the copolymerization ratio of the (meth)acrylic acid ester [II] is less than this range, the softness effect is not exhibited. In contrast, if the (meth)acrylic acid ester [II] is used at a ratio greater than this range, the water- and oil- repellency becomes inferior.

The copolymerization reaction can also be carried out by an emulsion polymerization method or a suspension polymerization method, but is preferably carried out by a solution polymerization method. The reaction solvent of the solution polymerization method is not particularly limited as long as it is a solvent that can dissolve the fluorine-containing copolymer; however, an organic solvent having a fluorine atom is preferably used. For example, the polymerization reaction is carried out in a fluorine-containing organic solvent, such as a hydrofluorocarbon (e.g., 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane, or perfluorohexane) or a halogen substituted product thereof, or a hydrofluoroether (e.g., Novec 7200 (C₄F₉OC₂H₅) or Novec 7300 (C₂F₅CF(OCH₃)C₃F₇), produced by 3M).

In addition to these, the following hydrofluorocarbons, hydrofluoroethers and the like can also be used.

Hydrofluorocarbons: CF₃(CF₂)₂CHF₂, CF₃(CF₂)₂CH₂F, CF₃CF₂CH₂CF₃, F₂C H(CF₂)₂CHF₂, F₂CHCH₂CF₂CF₃, CF₃CHFCH₂CF₃, CF₃CH₂CF₂CHF₂, F₂CHCHFC F₂CHF₂, CF₃CHFCF₂CH₃, F₂CH(CHF)₂CHF₂, CF₃CH₂CF₂CH₃, CF₃CF₂CH₂CH₃, F ₂CHCH₂CF₂CH₃, F₂CH(CF₂)₃CF₃, CF₃(CF₂)₂CHFCF₃, F₂CH(CF₂)₃CHF₂, CF₃(CH F)₂CF₂CF₃, CF₃CHFCF₂CH₂CF₃, CF₃CF(CF₃)CH₂CHF₂, CF₃CH(CF₃)CH₂CF₃, CF₃ CH₂CF₂CH₂CF₃, F₂CHCHFCF₂CHFCHF₂, F₂CH(CF₂)₂CHFCH₃, CF₃(CH₂)₃CF₃, F₂ CHCH₂CF₂CH₂CHF₂, CF₃(CF₂)₄CHF₂, CF₃(CF₂)₄CH₂F, CF₃(CF₂)₃CH₂CF₃, F₂CH (CF₂)₄CHF₂, CF₃CH(CF₃)CHFCF₂CF₃, CF₃CF₂CH₂CH(CF₃)₂, CF₃CH₂(CF₂)₂CH₂CF ₃, CF₃CF₂(CH₂)₂CF₂CF₃, CF₃(CF₂)₃CH₂CH₃, CF₃CH(CF₃)(CH₂)₂CF₃, F₂CHCF₂(CH ₂)₂CF₂CHF₂, CF₃(CF₂)₂(CH₂)₂CH₃ and the like.

Hydrofluoroethers: CF₃CF₂CF₂OCH₃, (CF₃)₂CFOCH₃, CF₃(CF₂)₂OCH₂CH₃, CF₃(CF₂)₃OCH₃, (CF₃)₂CFCF₂OCH₃, C(CF₃)₃OCH₃, CF₃(CF₂)₃OCH₂CH₃, (CF₃)₂CFCF₂OCH₂CH₃, (CF₃)₃COCH₂CH₃, CF₃CF(OCH₃)CF(CF₃)₂, CF₃CF(OCH₂CH₃)CF(CF₃)₂, C₅F₁₁OCH₂CH₃, CF₃(CF₂)₂CF(OCH₂CH₃)CF(CF₃)₂, CH₃O(CF₂)₄OCH₃, CH₃O(CF₂)₂OCH₂CH₃, C₃H₇OCF(CF₃)CF₂OCH₃ and the like.

If the solubility of the perfluoropolyether alcohol (meth)acrylic acid ester in the fluorine-containing organic solvent is not good, it is preferable to mix them with an alcohol. The alcohol is not particularly limited, but is preferably one that has solubility to the fluorine-containing copolymer to be obtained, that is compatible with the fluorine-containing organic solvent and that is also compatible with the perfluoropolyether alcohol (meth)acrylic acid derivative. For example, isopropyl alcohol is used as such an alcohol. The mixing ratio of fluorine-containing organic solvent to alcohol is preferably 95:5 to 70:30.

As with alcohols, aliphatic hydrocarbons, alicyclic hydrocarbons, aromatic hydrocarbons, esters, ketones, and the like can also be used.

Aliphatic hydrocarbons: n-pentane, 2-methylbutane, n-hexane, 3-methylpentane, 2,2-dimethylbutane, 2,3-dimethylbutane, n-heptane, n-octane, 2,2,4-trimethylpentane, n-nonane, 2,2,3-trimethylhexane, n-decane, n-undecane, n-dodecane, 2,2,4,6,6-pentamethylheptane, n-tridecane, n-tetradecane, n-hexadecane, etc.

Alicyclic hydrocarbons: cyclopentane, cyclohexane, methylcyclohexane, ethylcyclohexane, etc.

Aromatic hydrocarbons: benzene, toluene, xylene, 1,4-bis(trifluoromethyl)benzene, 1,3-bis(trifluoromethyl)benzene, etc.

Esters: methyl acetate, ethyl acetate, butyl acetate, methyl propionate, methyl lactate, ethyl lactate, pentyl lactate, etc.

Ketones: acetone, methyl ethyl ketone, 2-pentanone, 3-pentanone, 2-hexanone, methyl isobutyl ketone, etc.

Since the copolymerization reaction is carried out at a polymerization conversion rate of 90% or more, the weight ratio of each charged monomer is approximately the weight ratio of the copolymer composition to be produced.

In the obtained copolymer, further other copolymerizable ethylenically unsaturated monomers can be copolymerized at a ratio that does not impair the softness of the copolymer of the present invention. Examples thereof include styrene, α-methylstyrene, vinyl toluene, vinyl naphthalene, (meth)acrylonitrile, acrylamide, vinyl acetate, ethylene, propylene, piperylene, butadiene, isoprene, pentadiene and the like.

Moreover, if necessary, for the purpose of improving kneading processability, extrusion processability and the like, polyfunctional (meth)acrylates or oligomers having a glycol residue in the side chain can be further copolymerized for use. Examples thereof include di(meth)acrylates of alkylene glycols, such as ethylene glycol, propylene glycol, 1,4-butanediol, 1,6-hexanediol, and 1,9-nonanediol; di(meth)acrylates, such as neopentyl glycol, tetraethylene glycol, tripropylene glycol, and polypropylene glycol; bisphenol A/ethylene oxide adduct diacrylate, dimethylol tricyclodecane diacrylate, glycerol methacrylate acrylate, 3-acryloyloxy glycerol monomethacrylate and the like.

In addition, Karenz MOI-BP (2-[(3,5-dimethylpyrazolyl)carbonylamino]ethyl methacrylate, produced by Showa Denko K.K.), which is a commercial product, can also be used.

As an initiator used at about 0.1 to 4 wt.%, preferably about 1 to 2 wt.%, based on the total amount of the comonomers, diacyl peroxide, peroxycarbonate, peroxyester or the like, is used. Specific examples thereof include organic peroxides, such as isobutyryl peroxide, lauroyl peroxide, stearoyl peroxide, succinic acid peroxide, bis(heptafluorobutyryl) peroxide, pentafluorobutyroyl peroxide, bis(4-tert-butylcyclohexyl) peroxy dicarbonate, di-n-propyl peroxy dicarbonate, and diisopropyl peroxy dicarbonate. Depending on the polymerization reaction, an azo compound, inorganic peroxide or a redox system thereof can also be used. Depending on the reaction conditions and the composition ratio, the polymerization reaction may hardly progress; in that case, the polymerization initiator may be added again in the course of the polymerization reaction.

Further, a chain transfer agent can be used, if necessary, to adjust the molecular weight. Examples of the chain transfer agent include dimethyl ether, methyl t-butyl ether, C₁-C₆ alkanes, methanol, ethanol, 2-propanol, cyclohexane, carbon tetrachloride, chloroform, dichloromethane, methane, ethyl acetate, ethyl malonate, acetone-and the like.

The copolymerization reaction is carried out using such the reaction solvent, the reaction initiator and the like preferably at a reaction temperature of about 60 to 80°C for about 10 to 24 hours. After the completion of the reaction, a copolymer solution having a solid matters content of about 5 to 40 wt.% is obtained. The solvent is removed from this reaction mixture, thereby obtaining a fluorine-containing copolymer.

When the remaining unreacted comonomers were analyzed by gas chromatography, it was confirmed that the perfluoropolyether alcohol (meth)acrylic acid derivative [I] used in the copolymerization reaction was almost completely copolymerized.

The method for producing a copolymer of the polyfluoroalkyl alcohol (meth)acrylic acid derivative is not limited to the above solution polymerization method, and, for example, suspension polymerization method or emulsion polymerization method using water as the dispersion medium in the presence of a nonionic surfactant and/or a cationic surfactant may be employed.

The thus prepared copolymer of the polyfluoroalkyl alcohol (meth)acrylic acid derivative is isolated by a method of evaporation to dryness or aggregation by adding a flocculant such as an inorganic salt, and purified by washing with a solvent or the like. The weight average molecular weight Mw of the resulting copolymer is indicated by high-performance liquid chromatography method, and its value is about 2,000 to 2,000,000.

The polymer solution prepared by the solution polymerization method is further diluted with a fluorine-containing organic solvent such as 1,4-bis(trifluoromethyl)benzene or 1,3-bis(trifluoromethyl)benzene, preferably with the same fluorine-containing organic solvent as that used in the polymerization reaction, such that the solid matters content is about 0.01 to 30 wt.%, preferably about 0.05 to 15 wt.%, and is then used as a coating agent.
A coating agent can be also prepared, regarding the polymerization product prepared by aqueous emulsion polymerization method or suspension polymerization method, by using the polymerization product as an aqueous dispersion directly or after diluted with water to a solid matters content of about 0.1 to 10 wt.%, as an aqueous dispersion or an organic solvent solution by adding a flocculant to the polymerization reaction solution to aggregate the polymerization product and by letting the isolated copolymer through washing with water or an organic solvent dispersed in water or dissolved in a fluorine-containing organic solvent, by using the copolymer as an aqueous dispersion or organic solvent solution.
The aqueous dispersion preferably containing a surfactant and a water soluble organic solvent in a concentration of 20 wt.% or less is used.

To the polymer solution composed of the aqueous dispersion or fluorine-containing organic solvent solution of the copolymer, other additives that are necessary for the purpose of surface treatment agent, for example a melamine resin: a urea resin; a cross-linking agent such as a blocked isocyanate; a polymer extender; a silicone resin; an oil: another water repellent such as a wax; an insecticide; an antistatic agent; a dye stabilizer; a crease preventing agent; and a stain blocker can be further added.

The copolymer solution obtained in the above manner is effectively applied as a water- and oil-repellent to various rubber products, elastic resin products and the like. As the application method, coating, dipping, spraying, padding, roll coating or a combination thereof is generally used. For example, a bath having a solid matters content adjusted to about 0.1 to 10 wt.% can be used as a pad bath. The material to be treated is padded in this pad bath, and the excess liquid is removed, if necessary, by a squeezing roll and dried to achieve attachment so that the amount of fluorine-containing copolymer attached to the material to be treated is about 0.01 to 10 wt.%. Thereafter, although it depends on the type of the material to be treated, drying is generally performed at a temperature of about 100 to 200°C for about 1 minute to about 2 hours, and the water- and oil-repellent treatment is completed.

### EXAMPLES

The following describes the present invention with reference to Examples.

### Example 1

The following components were charged in a 50-ml capacity glass reaction container equipped with a condenser and a thermometer:

| | |
|---|---|
| CH₂=CHCOOCH₂CF(CF₃)[OCF₂CF(CF₃)]OC₃F₇ [PO-3-AC] | 8.04 g |
| CH₂=C(CH₃)COOCH₃ (Tg: 105°C) | 0.64 g |
| Solvent (Novec 7300, produced by 3M; C₄F₉OCH₃) | 17.72 g |
| Azobisisobutyronitrile | 44.3 mg |

While stirring the mixture, the copolymerization reaction was carried out at 70°C for 21 hours, thereby obtaining a polymerization reaction solution having a solid matters content of 28.6 wt.%.

The same solvent was added to the polymerization reaction solution to adjust its solid matters content to 10 wt.%. The resultant was spin-coated on an EPDM substrate (15.0 × 30.0 × 2.0 mm) at a rotational speed of 1000 rpm for 10 seconds, and baked at 120°C for 10 minutes in an oven, thereby producing a test sample. A softness test, a water- and oil-repellent test and a tackiness test are conducted to the test sample, and evaluating it according to the following evaluation criteria. Softness test method:

The test sample was 10 to 80% stretched by a tensile tester, the progress of stretching was observed using a microscope to observe cracks etc. in the coating film, and evaluation was carried out according to the following criteria.
Ⓞ: No cracks or wrinkles when 0% returned
   No cracks when +40% stretched
○: No cracks or wrinkles when 0% returned
   No cracks when +20% stretched
△: No cracks or wrinkles when 0% returned
   No cracks when +10% stretched
×: Cracks and wrinkles are observed when 0% returned

Water- and oil-repellent test method:
The test sample was subjected to a contact angle measurement method using Dropmaster DM500 (produced by Kyowa Interface Science Co., Ltd.). Two types of test liquids, water and hexadecane, were used. The evaluation criteria was as shown below.

Water-repellent test (pure water)
Ⓞ: A contact angle of 110° or more
○: A contact angle of 105° to 109°
△: A contact angle of 100° to 104°
×: A contact angle of 99° or less

Oil-repellent test (hexadecane)
Ⓞ: A contact angle of 70° or more
○: A contact angle of 65° to 69°
△: A contact angle of 60° to 64°
×: A contact angle of 59° or less

Tackiness test method:
The state of the coating film when the test sample was lightly touched with a finger was evaluated according to the following evaluation criteria.
Ⓞ: Tack-free
○: Nearly fingerprint remained
△: Slightly tacky
×: Nearly stringy

### Example 2

In Example 1, 8.25 g of

CH₂₌C(CH₃)COOCH₂CF(CF₃)[OCF₂CF(CF₃)]OC₃F₇ [PO-3-MAC]

was used in place of PO-3-AC. Further, the amount of solvent was changed to 18.15 g, and the amount of polymerization initiator was changed to 44.2 mg, thereby obtaining a polymerization reaction solution having a solid matters content of 31.3 wt.%.

### Example 3

In Example 2, 0.73 g of ethyl methacrylate (Tg: 65°C) was used in place of methyl methacrylate. Further, the amount of solvent was changed to 18.35 g, and the amount of polymerization initiator was changed to 44.0 mg, thereby obtaining a polymerization reaction solution having a solid matters content of 31.3 wt.%.

### Example 4

In Example 2, the amount of PO-3-MAC was changed to 8.26 g, and further 54.8 mg of 2-[(3,5-dimethylpyrazolyl)carbonylamino]ethyl methacrylate (Karenz MOI-BP, produced by Showa Denko K.K.) was used as a crosslinkable monomer. In addition, the amount of solvent was changed to 18.26 g, and the amount of polymerization initiator was changed to 44.7 mg, thereby obtaining a polymerization reaction solution having a solid matters content of 31.9 wt.%.

### Comparative Example 1

In Example 1, 10.73 g of

CH₂=CH(CH₃)COOC₅F_{IO}CH₂C₆F₁₃ [fluorine-containing monomer A]

was used in place of PO-3-AC, and methyl methacrylate was not used. Further, the amount of solvent was changed to 21.83 g, and the amount of polymerization initiator was changed to 37.1 mg, thereby obtaining a polymerization reaction solution having a solid matters content of 33.0 wt.%.

### Comparative Example 2

In Example 1, 8.26 g of

CH₂=CHCOOCH₂CH₂C₆F₁₃ [FAMAC-6]

was used in place of PO-3-AC, and methyl methacrylate was not used. Further, the amount of solvent was changed to 26.45 g, and the amount of polymerization initiator was changed to 61.9 mg, thereby obtaining a polymerization reaction solution having a solid matters content of 34.6 wt.%.

### Comparative Example 3

In Example 2, 28.1 mg of 2-hydroxyethyl acrylate [2HEA] was additionally used as a crosslinkable monomer. Further, the amount of solvent was changed to 18.21 g, and the amount of polymerization initiator was changed to 44.6 mg. However, since 2HEA was poorly compatible with the solvent Novec 7300, the product became cloudy and solidified, and the various characteristics could not be measured.

### Comparative Example 4

In Example 1, 0.82 g of n-butyl acrylate (Tg: -49°C) was used in place of methyl methacrylate. Further, the amount of solvent was changed to 18.09 g. However, the product was a liquid material without solid matters, and the various characteristics could not be measured.

### Comparative Example 5

In Example 2, 0. 91 g of n-butyl methacrylate (Tg: 20°C) was used in place of methyl methacrylate. Further, the amount of solvent was changed to 17.91 g, thereby obtaining a polymerization reaction solution having a solid matters content of 27.6 wt.%.

Following Table shows the results obtained respectively in the above Examples 1 to 4 and Comparative Examples 1 to 2 and 5.

**Table**

| Example | Softness test | Water-repellent test | Oil-repellent test | Tackiness test |
|---|---|---|---|---|
| Example 1 | Ⓞ | Ⓞ | Ⓞ | △ |
| Example 2 | ○ | Ⓞ | ○ | Ⓞ |
| Example 3 | ○ | Ⓞ | Ⓞ | Ⓞ |
| Example 4 | ○ | ○ | ○ | Ⓞ |
| Comparative Example 1 | × | Ⓞ | Ⓞ | Ⓞ |
| Comparative Example 2 | × | Ⓞ | Ⓞ | Ⓞ |
| Comparative Example 5 | × | Ⓞ | ○ | ○ |

## Claims

1. A soft water- and oil-repellent comprising, as an active ingredient, a copolymer of a perfluoropolyether alcohol (meth)acrylic acid derivative represented by the general formula:
CH₂=CR₁COOCH₂CF(CF₃)[OCF₂CF(CF₃)]ₙOC₃F₇ [I]
(wherein R₁ is a hydrogen atom or a methyl group, and n is an integer of 1 to 20), and a (meth)acrylic acid ester represented by the general formula:
CH₂=CR₁COOR₂ [II]
(wherein R₁ is a hydrogen atom or a methyl group, and R₂ is an alkyl group, an alkoxyalkyl group, a cycloalkyl group, an aryl group, or an aralkyl group) and having a glass transition temperature Tg of 51 to 120°C.

2. The soft water- and oil-repellent according to claim 1, wherein the perfluoropolyether alcohol (meth)acrylic acid derivative [I] is
CH₂=CHCOOCH₂CF(CF₃)[OCF₂CF(CF₃)]OC₃F₇
or
CH₂=C(CH₃)COOCH₂CF(CF₃)[OCF₂CF(CF₃)]OC₃F₇.

3. The soft water- and oil-repellent according to claim 1, wherein the (meth)acrylic acid ester having a glass transition temperature of 51 to 120°C is methyl methacrylate or ethyl methacrylate.

4. The soft water- and oil-repellent according to claim 1, wherein the (meth)acrylic acid ester is copolymerized at a ratio of 5 to 30 wt.% in the copolymer.

5. The soft water- and oil-repellent according to Claim 1, which is prepared as an organic solvent solution.

6. The soft water- and oil-repellent according to Claim 5, which is prepared as a fluorine-containing organic solvent solution.

7. The soft water- and oil-repellent according to Claim 5 or 6, which is applied to rubber product.

8. The soft water- and oil-repellent according to Claim 5 or 6, which is applied to elastic resin product.

9. A rubber product surface-coated with the soft water- and oil-repellent according to claim 7.

10. An elastic resin product surface-coated with the soft water- and oil-repellent according to claim 8.

## Amended claims

### Amended claims under Art. 19.1 PCT

1. (Amended) A soft water- and oil-repellent comprising, as an active ingredient, a copolymer of CH₂=CHCOOCH₂CF(CF₃)[OCF₂CF(CF₃)]OC₃F₇ and an (meth)acrylic acid ester represented by the general formula:
CH₂=CR₁COOR₂ [II]
(wherein R₁ is a hydrogen atom or a methyl group, and R₂ is an alkyl group, an alkoxyalkyl group, a cycloalkyl group, an aryl group, or an aralkyl group) and having a glass transition temperature Tg of 51 to 120°C.

2. (deleted)

3. The soft water- and oil-repellent according to claim 1, wherein the (meth)acrylic acid ester having a glass transition temperature of 51 to 120°C is methyl methacrylate or ethyl methacrylate.

4. The soft water- and oil-repellent according to claim 1, wherein the (meth)acrylic acid ester is copolymerized at a ratio of 5 to 30 wt.% in the copolymer.

5. The soft water- and oil-repellent according to Claim 1, which is prepared as an organic solvent solution.

6. The soft water- and oil-repellent according to Claim 5, which is prepared as a fluorine-containing organic solvent solution.

7. (Amended) A soft water- and oil-repellent, which comprises an organic solvent solution of a copolymer of a perfluoropolyether alcohol (meth)acrylic acid derivative represented by the general formula:
CH₂=CR₁COOCH₂CF(CF₃)[OCF₂CF(CF₃)]ₙOC₃F₇ [I]
(wherein R₁ is a hydrogen atom or a methyl group, and n is an integer of 1 to 20), and a (meth)acrylic acid ester represented by the general formula:
CH₂=CR₁COOR₂ [II]
(wherein R₁ is a hydrogen atom or a methyl group, and R₂ is an alkyl group, an alkoxyalkyl group, a cycloalkyl group, an aryl group, or an aralkyl group) and having a glass transition temperature Tg of 51 to 120°C, and which is applied to a rubber product.

8. (Amended) The soft water- and oil-repellent according to claim 7, wherein the rubber product is an elastic resin product.

9. A rubber product surface-coated with the soft water- and oil-repellent according to claim 7.

10. An elastic resin product surface-coated with the soft water- and oil-repellent according to claim 8.

Statement under Art. 19.1 PCT
The perfluoropolyether alcohol (meth)acrylic acid derivative represented by the general formula [I] in claim 1 was limited to CH₂=CHCOOCH₂CF(CF₃)[OCF₂CF(CF₃)]OC₃F₇, based on the description in paragraphs [0039] to [0043] and [0049].

A copolymer using CH₂=CHCOOCH₂CF(CF₃)[OCF₂CF(CF₃)]OC₃F₇ has an effect in its water- and oil- repellency, being superior to that of a copolymer using CH₂=C(CH₃)COOCH₂CF(CF₃)[OCF₂CF(CF₃)]OC₃F₇.
